# EUROPÄISCHE PATENTSCHRIFT

(11) **EP 1 255 695 B1**
(45) Veröffentlichungstag und Bekanntmachung des Hinweises auf die Patenterteilung: **01.10.2003**
(21) Anmeldenummer: 01905679.5
(22) Anmeldetag: 24.01.2001
(51) Int. Cl.: C01C 3/08, C01C 3/10

(54) **VERFAHREN ZUR HERSTELLUNG VON FORMLINGEN ANORGANISCHER CYANIDE UND NACH DEM VERFAHREN ERHÄLTLICHE PRODUKTE**
METHOD FOR PRODUCING SHAPED INORGANIC CYANIDE BODIES AND PRODUCTS OBTAINED ACCORDING TO SAID METHOD
PROCEDE DE FABRICATION D'AGGLOMERES DE CYANURES INORGANIQUES ET PRODUITS OBTENUS SUIVANT CE PROCEDE

(30) Priorität: 16.02.2000 DE 10006862
(43) Veröffentlichungstag der Anmeldung: 13.11.2002
(73) Patentinhaber: Degussa AG, 40474 Düsseldorf (DE)
(72) Erfinder: JAFELD, Markus, 50226 Frechen (DE); SCHÄFLEIN, Stephan, 45721 Haltern (DE); STEIER, Norbert, 53881 Euskirchen (DE); DICKMANN, Annette, 63517 Rodenbach (DE); FRANKE, Stefan, 35216 Biedenkopf (DE); RUBO, Andreas, 35440 Leihgestern (DE); SAUER, Manfred, 63517 Rodenbach (DE); GAIL, Ernst, 63329 Egelsbach (DE)
(86) Internationale Anmeldenummer: EP0100757
(87) Internationale Veröffentlichungsnummer: WO01060747

(56) Entgegenhaltungen:
- EP-A- 0 197 216
- EP-A- 0 857 689
- DE-B- 1 150 367
- DATABASE CHEMABS [Online] CHEMICAL ABSTRACTS SERVICE, COLUMBUS, OHIO, US; ALISERA VAZQUEZ, JUAN ANTONIO: "Sodium cyanide in solid form" retrieved from STN Database accession no. 88:172975 CA XP002166006 & ES 446 317 A (ENERGIA E INDUSTRIAS ARAGONESAS S. A., SPAIN) 16. Juni 1977 (1977-06-16)

## Beschreibung

Die Erfindung richtet sich auf ein Verfahren zur Herstellung von Formlingen aus der Reihe der Briketts und Tabletten anorganischer Cyanide, insbesondere Formlinge von Alkali- und Erdalkalicyaniden, wie Natrium-, Kalium- und Calciumcyanid. Das Verfahren umfasst eine Überführung von durch ein Kristallisationsverfahren gewonnenem teilchenförmigen Cyanid in im wesentlichen staubfreie Formlinge durch Verpressen. Ein weiterer Gegenstand betrifft die nach dem erfindungsgemäßen Verfahren erhältlichen Briketts und Tabletten.

Übliche Handelsformen anorganischer Cyanide, die in der Minenindustrie, chemischen Industrie, Galvanobetrieben und Härtereien Anwendung finden, sind nahezu staubfreie Granulate mit einem Korndurchmesser im Bereich von 0,1 bis 5 mm, kissenförmige Briketts mit ca. 15-40 g und zylindrische Tabletten mit ca. 20-40 g und 20-40 mm Durchmesser.

Anorganische Cyanide, wie Alkali- und Erdalkalicyanide, werden heute durch einen Neutralisationsprozess hergestellt, indem eine Lösung des Metallhydroxids mit flüssigem oder gasförmigem Cyanwasserstoff umgesetzt wird. Die Umsetzung erfolgt im allgemeinen bei erhöhter Temperatur; die Neutralisationstemperatur wird zur nachfolgenden Verdampfung von Wasser verwendet. Trotz der Einfachheit der Reaktion ist eine sorgfältige Prozesskontrolle notwendig, um eine Polymerisation von HCN, Hydrolyse des Cyanids, Formiat- und Carbonatbildung zu vermeiden. Zweckmäßigerweise wird die Konzentrierung und Ausfällung des Cyanids in Gegenwart eines geringen Gehalts an Alkalihydroxid unter vermindertem Druck bei unter 100 °C durchgeführt, bevorzugt in einem Vakuumkristaller. Die Kristalle werden in einer Fest-Flüssig-Trennvorrichtung, üblicherweise einem Filter oder einer Zentrifuge, von der Mutterlauge, die rezykliert wird, abgetrennt. Das feuchte Cyanid (= Filterkuchen), dessen Gesamtwassergehalt (anhaftende Feuchte und Hydratwasser) je nach den Bedingungen der Fest-Flüssig-Trennung im Bereich von 2 bis 15 Gew.-%, meistens aber im Bereich von 4 bis 13 Gew.-% liegt, wird mittels unterschiedlicher Verfahren anschließend auf Restfeuchtegehalte unter 1 Gew.-%, meistens unter 0,1 Gew.-%, getrocknet und in übliche Handelsformen überführt.

Im Verfahren gemäß US-Patent 3,615,176 wird das Cyanid in einem Drehfilter von der Mutterlauge abgetrennt, wobei 250 bis 450 °C heiße Luft der Filterhaube zugeführt wird, wodurch eine Vortrocknung bewirkt und der Feuchtegehalt auf unter 5 Gew.-% abgesenkt wird. Das vorgetrocknete Produkt wird dann in einem nachgeschalteten Trockner mit Heißluft adiabatisch bis auf einen Restfeuchtegehalt von weniger als 0,05 Gew.-% getrocknet. Das trockene Pulver wird anschließend zwischen Kompaktierwalzen unter hohem Druck kompaktiert und das erhaltene semiplastische Band gebrochen und das Granulat siebfraktioniert. Dieser mehrstufige Trocknungs- und Formgebungsprozess ist sehr energieaufwendig und macht eine bezügliche Investition und Instandhaltung aufwendige Anlage erforderlich. Zudem kommt es zu einem erheblichen Staubanfall, der zuverlässig abgetrennt und rezykliert werden muss.

Im Verfahren gemäß EP-A 0 197 216 schließt sich an die zweistufige Trocknung des zuvor gewürdigten Verfahrens eine Brikettierung des trockenen Cyanids an, und mittels einer Vorrichtung zur Nachbehandlung der Briketts werden oberflächlich anhaftende Staubanteile entfernt. Auch dieses Verfahren ist technisch sehr aufwendig und erfordert einen ähnlichen Energiebedarf wie das Verfahren des US-Patents 3,615,176.

Ein weiteres, allerdings gleichfalls sehr aufwendiges Verfahren zur Herstellung von Natriumcyanid-Granulaten lehrt die CN 1172071 A: Nach der Neutralisationsreaktion wird bei tiefer Temperatur (-6 bis -12 °C) Natriumcyaniddihydrat auskristallisiert: Die Kristalle werden aufgeschmolzen, mit vorher getrocknetem Granulat gemischt und dann granuliert; das Granulat wird mittels Mikrowellen-Trocknung auf eine Restfeuchte von weniger als 0,5 Gew.-% getrocknet. Das Verfahren erfordert einen hohen Energieaufwand, weil pro t getrockneten NaCN-Granulats ca. 0,7 t Wasser verdampft werden müssen und zudem Kühlsole benötigt wird.

Schließlich lassen sich gemäß ES-Patent 538,296 Presslinge anorganischer Cyanide herstellen, indem Kristallisat mit einem Wassergehalt von 2 bis 8 Gew.-% mit einem vernetzenden oder quellenden Bindemittel und einem Stabilisator vesetzt und das Gemisch bei etwa 35 °C granuliert und dann zu zylindrischen Tabletten verpresst wird. Anstelle der Kombination aus Granulierung und Verpressung kann gemäß ES-Patent 446,317 ein Bindemittel enthaltendes NaCN-Kristallisat auch mittels eines Extruders in Stränge überführt werden; die Stränge werden auf einen Restwassergehalt von etwa 0,2 Gew.-% getrocknet. Diese Verfahren weisen als Vorteile niedrigere Investitionskosten und einen niedrigeren Energiebedarf auf. Nachteilig ist aber der Einsatz von 0,1 bis 10 Gew.-% eines artfremden Bindemittels, wie Mono-, Di- oder Polysaccharid, Agar-Agar oder Gelatine, wodurch die Produktreinheit gemindert wird.

Aufgabe der Erfindung ist demgemäß, ein weiteres, bezüglich der Wirtschaftlichkeit verbessertes Verfahren zum Überführen von mittels eines Kristallisationsverfahrens gewonnenem teilchenförmigem anorganischen Cyanid mit einem Restwassergehalt (Summe aus Hydratwasser und anhaftendem Wasser) im Bereich von 2 bis 15 Gew.-% in stabile, im wesentlichen staubfreie Formlinge aufzuzeigen. Das Verfahren sollte ohne den Einsatz von Formgebungshilfsstoffen durchführbar sein und somit die Produktqualität nicht durch die Anwesenheit von Hilfsstoffen mindern. Gemäß einer weiteren Aufgabe sollte das Verfahren vorzugsweise keinen separaten Trocknungsschritt erfordern und damit nur einen geringen Energieaufwand erfordern. Gemäß einer weiteren Aufgabe sollten sich die nach dem erfindungsgemäßen Verfahren erhältlichen Formlinge durch eine für die Praxis ausreichend hohe Härte und schnelle Löslichkeit in Wasser sowie hohe Lagerstabilität auszeichnen.

Diese Aufgaben werden gelöst durch ein Verfahren zur Herstellung von Formlingen anorganischer Cyanide, insbesondere Alkalimetallcyanide und Erdalkalimetallcyanide, umfassend Formgebung von durch ein Kristallisationsverfahren gewonnenem teilchenförmigen anorganischen Cyanid mittels einer Vorrichtung zur Formgebung unter Verpressen des teilchenförmigen Cyanids, das dadurch gekennzeichnet ist, dass man ein im Rahmen des Kristallisationsverfahrens von einer Mutterlauge mittels einer Fest-Flüssig-Trennvorrichtung abgetrenntes Cyanid-Kristallisat mit einem Gesamtwassergehalt von 2 bis 15 Gew.-% ohne Zugabe eines Formgebungshilfsstoffs einer Vorrichtung zur zum Brikettieren oder Tablettieren zuführt. und unter Druck zu Formlingen mit einem Wassergehalt im Bereich von 0,1 bis 6 Gew.-% verpresst, wobei der Wassergehalt der Formlinge stets niedriger ist als jener des zu ihrer Herstellung eingesetzten Kristallisats. Die Unteransprüche richten sich auf bevorzugte Ausführungsformen.

Das Verfahren betrifft die Herstellung von Formlingen anorganischer Metallcyanide, nicht aber Cyanokomplexe. Besonders betrifft es Alkalimetall- und Erdalkalicyanide genannt), wie insbesondere Natrium-, Kalium- und Calciumcyanid, wobei Natriumcyanid als technisch größtes Produkt aus dieser Reihe besonders bevorzugt wird.

Dem eigentlichen erfindungsgemäßen Verfahren ist eine übliche Herstellung des Cyanids durch Neutralisation des Metallhydroxids mit Cyanwasserstoff und Kristallisation des Cyanids vorgeschaltet. Das kristallisierte Cyanid wird mittels einer üblichen Fest-Flüssig-Trennvorrichtung, insbesondere einem Filterapparat, wie einem Drehfilter, oder einer Zentrifuge von der Mutterlauge abgetrennt. Bevorzugt erfolgt die Abtrennung des Kristallisats und teilweise Entwässerung kontinuierlich. Im allgemeinen erfolgt die Phasentrennung bei einer Temperatur im Bereich von 20 bis 80 °C, insbesondere aber 40 bis 70 °C. Durch eine Temperatur oberhalb der Umwandlungstemperatur des Natriumcyanid-dihydrats (34,7 °C) wird ein zu hoher Gesamtwassergehalt im abgetrennten NaCN-Kristallisat vermieden. Je nach den Kristallisationsbedingungen, der verwendeten Trennvorrichtung und den Betriebsbedingungen hierfür liegt der Wassergehalt des Kristallisats im Bereich von 2 bis 15 Gew.-%. Mit einem üblichen Drehfilter lässt sich im allgemeinen ein Kristallisat mit einem Wassergehalt im Bereich von 4 bis 15 Gew.-%, insbesondere 8 bis 13 Gew.-%, mit einer Zentrifuge ein Kristallisat mit einem Wassergehalt von 2 bis 10 Gew.-% gewinnen.

Das so erhaltene Kristallisat, das herstellungsbedingt zu Stabilisierungszwecken vorzugsweise eine geringe Menge (0,1 bis 1 Gew.-% ,insbesondere 0,2 bis 0,74 Gew.-%) des dem Cyanid zugrundeliegenden Metallhydroxids enthält, wird ohne weitere Trocknung und ohne Zusatz eines Bindemittels der Vorrichtung für die Formgebung zugeführt und darin verpresst. Falls erwünscht, kann dem Kristallisat auch ein weiterer Stabilisator zugesetzt werden. In der Regel wird aber kein Stabilisator oder anderer Hilfsstoff zugesetzt, um zu einer möglichst hohen Produktreinheit zu gelangen.

Die Vorrichtung zur Formgebung kann unterschiedlich ausgebildet sein, in allen Fällen erfolgt unter Druckanwendung eine Verdichtung des eingebrachten Materials. Geeignete Vorrichtungen sind dem Fachmann bekannt - beispielhaft wird auf folgende Dokumente verwiesen: Ullmann's encyclopedia of industrial chemistry, 5^{th} ed. (1988), Vol. B2, 7-28 bis 7-32; Lehrbuch für Mechanische Verfahrenstechnik, Springer (1994), Kapitel Pressagglomeration, Seiten 210-224. Geeignete Vorrichtungen sind Schnecken- und Walzenverdichter, Extruder, Brikettiermaschinen, Stampfpressen und Tablettiermaschinen. Besonders bevorzugt werden kontinuierlich arbeitende Brikettiermaschinen, wobei die Kompaktierwalzen eine entsprechend der Form der herzustellenden Formlinge Struktur aufweist. Der anzuwendende Kompaktierdruck richtet sich nach der gewünschten Verdichtung und Härte der Formlinge. Die in einem üblichen Briketter aufzuwendende Kraft liegt im allgemeinen im Bereich von 10 bis 140 N/cm bei einem Walzendurchmesser von 1000 mm.

Bei der Verdichtung und insbesondere der Brikettierung kommt es beim Einsatz eines Kristallisats mit anspruchsgemäßem Wassergehalt am Pressspalt zu einem Austritt von schlammartiger Flüssigkeit (= Suspension des Metallcyanids in Wasser), welche abgeleitet in den Kristaller rezykliert wird. Durch das Kompaktieren kommt es somit zu einer Entwässerung des sich bildenden Formlings, so dass eine Trocknung mit Heißgas oder Mikrowelle nicht erforderlich ist. Wie aus den Beispielen folgt, kann ein Kristallisat mit einem Wassergehalt von 8 bis 13 Gew.-% in einem Briketter zu Briketts mit einem Wassergehalt von 0,5 bis 6 Gew.-% entwässert werden. Bei geringerem Wassergehalt des Einsatzmaterials, etwa 2 bis 10 %, insbesondere 3 bis 8 %, wie er durch Zentrifugieren des Kristallisats erhältlich ist, können Briketts mit einem Wassergehalt im Bereich von 0,1 bis 5 Gew.-% erhalten werden.

Im erfindungsgemäßen Verfahren, insbesondere bei der Erzeugung von Briketts und Tabletten einheitlicher Größe, wird eine Staubbelastung vermieden. Weder vor noch nach der Formgebung ist ein Trocknungsschritt erforderlich. Die Temperatur des zu verdichtenden Materials, der Wassergehalt desselben sowie der Verdichtungsdruck sind Parameter, welche die Eigenschaften der Formlinge beeinflussen.

Gegenstand der Erfindung sind auch die nach dem erfindungsgemäßen Verfahren erhältlichen Briketts anorganischer Cyanide, insbesondere Natriumcyanidbriketts, mit ihrer außergewöhnlichen Eigenschaftskombination.

Überraschenderweise werden durch das Verdichten des 2 bis 15 Gew.-% Wasser enthaltenden Kristallisats Formlinge erhalten, deren Wassergehalt durch das Verdichten üblicherweise erniedrigt wird, im allgemeinen auf Werte von gleich oder weniger als 6 Gew.-%, vorzugsweise gleich/weniger als 5 Gew.-%, und welche innerhalb weniger Minuten nach dem Verdichten nachhärten. Dieser Nachhärtungseffekt ist insbesondere bei Natriumcyanid stark ausgeprägt; möglicherweise ist dies eine Folge der Dihydratbildung mit dem Restwasser.

Die erfindungsgemäß erzeugten Formlinge weisen überraschenderweise trotz erheblich geringerem Druck beim Verpressen im Vergleich zum Verpressen von herkömmlich getrocknetem Produkt eine für verkaufsfähige und damit staubfreie Ware ausreichend Härte auf. Desweiteren wurde festgestellt, dass sich die erfindungsgemäßen Formlinge mindestens gleich, teilweise schneller in Wasser auflösen als aus getrocknetem Cyanid hergestellte Formlinge.

Die erfindungsgemäßen Formlinge zeichnen sich durch eine hohe Produktreinheit aus, weil zur Formgebung keine Hilfsstoffe als Bindemittel zugesetzt werden. Einziges Bindemittel scheint das in den Formlingen verbleibende restliche Wasser zu sein. Trotz eines gewissen Restwassergehalts von gleich/weniger als 6 Gew.-% bis etwa 0,2 Gew.-% in den erfindungsgemäßen Formlingen weisen diese überraschenderweise keinen höheren Formiatgehalt und Carbonatgehalt auf als nach vorbekannten Verfahren hergestellte Formlinge, deren Wassergehalt vor, während oder nach der Formgebung durch eine Trocknung auf Werte unter 0,1 Gew.-% reduziert wurde. Trotz des gewissen Restwassergehalts und eines niedrigen Metallhydroxidgehalts von 0,1 bis 1 Gew.-%, insbesondere um/unter 0,5 Gew.-%, kommt es unter üblichen Lagerbedingungen bei 3-monatiger Lagerung im wesentlichen zu keiner Formiat- und Ammoniakbildung und zu keiner unerwünschten HCN-Polymerisation und damit keiner Verfärbung. Nicht vorhersehbar war auch die verminderte Verklumpungsneigung erfindungsgemäßer Metallcyanid-Formlinge, insbesondere Natriumcyanid-Formlinge, verglichen mit aus zuvor intensiv getrocknetem teilchenförmigem Cyanid hergestellten Formlingen. Die nachfolgenden Beispiele verdeutlichen das erfindungsgemäße Verfahren sowie die damit erhältlichen Produkte.

### Beispiel 1

Verdichten von mittels eines Drehfilters isoliertem Natriumcyanid-Kristallisat:

Eingesetzt wurde das aus einem herkömmlichen Drehfilter erhältliche Natriumcyanid - Kristallisat mit einer Restfeuchte von 8 bis 13 Gew.-%. Der NaCN-Gehalt lag zwischen 86 und 91 %. Als Nebenbestandteile waren im NaCN-Kristallisat noch vorhanden: NaOH = 0,2 - 0,7 %, Na₂CO₃ = 0,1 - 0,4 % und Formiat = 0 - 0,2 %. Die Temperatur des zur Kompaktierung eingesetzten Kristallisats lag im Bereich von 20 bis 70 °C.

Ein Briketter herkömmlicher Bauart zur Herstellung kissenförmiger Formlinge mit einem Gewicht von 15 g (bzw. 7 g bei einem Versuchsbriketter) wurde mittels einer Schnecke mit dem Natriumcyanid-Filterkuchen beaufschlagt. Erhalten wurden Briketts, die nach einer Nachhärtezeit von maximal 30 Minuten eine Festigkeit von 200 - 300 (Kraft, bei der das Kissen bricht) aufwiesen. Feuchtes NaCN-Kristallisat, das in einem Temperaturbereich zwischen 50 bis 70 °C verdichtet wird, zeigte beim nachfolgenden Abkühlen eine Nachhärtung der Briketts, die wahrscheinlich durch die Bindung eines Teils des noch vorhandenen Wassers als Dihydratkristallwasser hervorgerufen wird. Die Zusammensetzung (Gew.-%) der Briketts bewegte sich im folgenden Bereich: NaCN = 93 - 99 %; NaOH = 0,2 - 0,7 %; Na₂CO₃ = 0,1 - 0,4 %; NaHCO₂ = 0 - 0,2 %. Der Wassergehalt lag zwischen 0,5 - 3 %.

### Beispiel 2

Brikettierung von Kaliumcyanid

Mit aus einem herkömmlichen Drehfilter erhaltenem KCN-Kristallisat (KCN = 88 - 90 %; KOH = 0,3 - 0,6 %; Wasser = 8 - 10 %) wurden analog Beispiel 1 Briketts hergestellt. Die Festigkeit der erhaltenen Briketts war geringer als jene der NaCN-Briketts, jedoch für die Lagerung, den Transport und die staubfreie Handhabung völlig ausreichend. Das kompaktierte Material hatte eine durchschnittliche Zusammensetzung von 97 - 99 % KCN, 0,2 - 0,6 % KOH und 0,2 - 2 % Wasser. Die Tabelle enthält Stoffdaten einiger Beispiele.

### Beispiele 3.1 bis 3.4

### Verdichten von mittels Zentrifuge isoliertem NaCN-Kristallisat

Aus einer herkömmlichen Zentrifuge wurde NaCN-Kristallisat mit einer Restfeuchte von 2 - 10 Gew.-% H₂O erhalten. Der NaCN-Gehalt des Kristallisats lag zwischen 90 und 96 %. Die Konzentrationen der Nebenbestandteile (NaOH, Carbonat und Formiat) lagen in den gleichen Bereichen wie in Beispiel 1 beschrieben. Die Temperatur des eingesetzten Kristallisats lag zwischen 15 und 50 °C. Die Nachhärtung des nach der Kompaktierung erhaltenen Materials wurde bei dem Kristallisat aus der Zentrifuge in gleicher Weise wie bei dem mit dem Drehfilter isolierten NaCN beobachtet. Die erhaltenen Briketts wiesen NaCN-Gehalte von 97 - 99 % und Wasserkonzentrationen von 0,2 - 5 % auf. Eine Zunahme der Formiat- und Carbonatkonzentrationen war auch in diesem Fall nicht festzustellen.

### Beispiel 4

Eine Kompaktierung von mittels einer Zentrifuge isoliertem KCN-Kristallisat führte zu vergleichbaren Ergebnissen wie unter Einsatz von Drehfiltermaterial gemäß Beispiel 2.

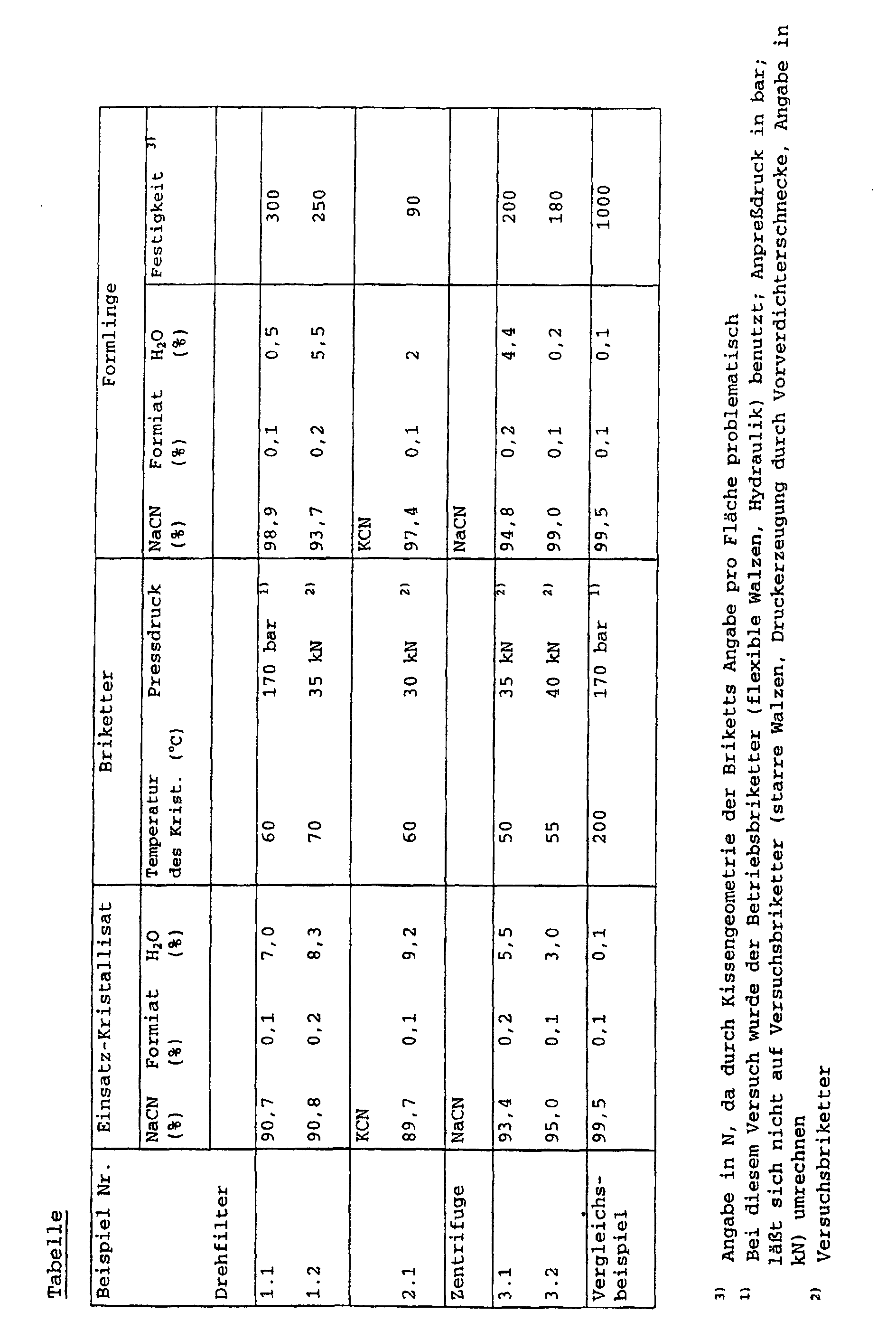

## Patentansprüche

1. Verfahren zur Herstellung von Formlingen anorganischer Cyanide, insbesondere Alkalimetallcyanide und Erdalkalimetallcyanide, umfassend Formgebung von durch ein Kristallisationsverfahren gewonnenem teilchenförmigen anorganischen Cyanid mittels einer Vorrichtung zur Formgebung unter Verpressen des teilchenförmigen Cyanids,
**dadurch gekennzeichnet,**
**dass** man ein im Rahmen des Kristallisationsverfahrens von einer Mutterlauge mittels einer Fest-Flüssig-Trennvorrichtung abgetrenntes Cyanid-Kristallisat mit einem Gesamtwassergehalt von 2 bis 15 Gew.-% ohne Zugabe eines Formgebungshilfsstoffs einer Vorrichtung zum Brikettieren oder Tablettieren zuführt und unter Druck zu Formlingen mit einem Wassergehalt im Bereich von 0,1 bis 6 Gew.-% verpresst, wobei der Wassergehalt der Formlinge stets niedriger ist als jener des zu ihrer Herstellung eingesetzten Kristallisats.

2. Verfahren nach Anspruch 1,
**dadurch gekennzeichnet,**
**dass** man das Verpressen in der Vorrichtung zur Formgebung bei einer Temperatur im Bereich von 40 bis 70 °C durchführt und die Formlinge nicht nachgetrocknet.

3. Verfahren nach Anspruch 1 oder 2,
**dadurch gekennzeichnet,**
**dass** man die Formgebung mittels einer Brikettierungsmaschine, deren Kompaktierwalze die Struktur der Formlinge aufweist, durchführt.

4. Verfahren nach einem der Ansprüche 1 bis 3,
**dadurch gekennzeichnet,**
**dass** man der Vorrichtung zur Formgebung Cyanid-Kristallisat aus einem Drehfilter mit einem Wassergehalt von 4 bis 13 Gew.-% oder aus einer Zentrifuge mit einem Wassergehalt von 2 bis 10 Gew.-% zuführt.

5. Verfahren nach einem der Ansprüche 1 bis 4,
**dadurch gekennzeichnet,**
**dass** man Natriumcyanid-Kristallisat aus einem Drehfilter oder einer Zentrifuge in Formlinge überführt, wobei das Kristallisat bei einer Temperatur oberhalb der Umwandlungstemperatur des Natriumcyanid-dihydrats (Tᵤ = 35,7 °C) verpresst und dabei zumindest teilweise entwässert wird.

6. Verfahren nach einem der Ansprüche 1 bis 5,
**dadurch gekennzeichnet,**
**dass** man die Formgebung von Natriumcyanid oberhalb 40 °C unter einem Druck durchführt, der eine Entwässerung auf einen Restwassergehalt der Formlinge (anhaftende Feuchte und Hydrate) von 0,5 bis 5 Gew.-% ermöglicht.

7. Briketts anorganischer Cyanide, insbesondere Alkalimetall- und Erdalkalimetallcyanide, insbesondere Natriumcyanid-Briketts, erhältlich nach dem Verfahren gemäß einem der Ansprüche 1 bis 6.

8. Briketts nach Anspruch 7,
**dadurch gekennzeichnet,**
**dass** sie von 0,1 bis 1 Gew.-%, insbesondere 0,2 bis 0,7 Gew.-% des dem Cyanid zugrundeliegendem Metallhydroxids enthalten.

## Claims

1. A process for producing shaped articles of inorganic cyanides, in particular alkali metal cyanides and alkaline earth metal cyanides, comprising shaping of particle-form inorganic cyanide, obtained by a crystallisation process, by means of a device for shaping the particle-form cyanide by press moulding,
**characterised in that**
a cyanide crystallisate with a total water content of from 2 to 15 wt.%, separated off from a mother liquor during the crystallisation process by means of a solid/liquid separating device, is fed to a briquetting or tabletting device without the addition of a shaping auxiliary and press moulded under pressure into shaped articles with a water content in the range of from 0.1 to 6 wt.%, wherein the water content of the shaped articles is always lower than that of the crystallisate used in the production thereof.

2. A process according to claim 1,
**characterised in that**
press moulding in the shaping device proceeds at a temperature in the range of from 40 to 70 °C and the shaped articles are not post-dried.

3. A process according to claim 1 or claim 2,
**characterised in that**
shaping is performed by means of a briquetting machine, the compacting roll of which exhibits the structure of the shaped articles.

4. A process according to one of claims 1 to 3,
**characterised in that**
cyanide crystallisate from a rotary filter with a water content of from 4 to 13 wt.% or from a centrifuge with a water content of from 2 to 10 wt.% is fed to the shaping device.

5. A process according to one of claims 1 to 4,
**characterised in that**
sodium cyanide crystallisate from a rotary filter or a centrifuge is converted into shaped articles, wherein the crystallisate is press moulded at a temperature above the transition temperature of sodium cyanide dihydrate (Tᵤ = 35.7 °C) and at least partially dewatered at the same time.

6. A process according to one of claims 1 to 5,
**characterised in that**
shaping of sodium cyanide is performed above 40 °C under a pressure which allows dewatering to a shaped article residual water content (adherent moisture and hydrates) of from 0.5 to 5 wt.%.

7. Briquets of inorganic cyanides, especially alkali metal and alkaline earth metal cyanides, in particular sodium cyanide briquets, obtainable by the process according to one of claims 1 to 6.

8. Briquets according to claim 7,
**characterised in that**
they contain from 0.1 to 1 wt.%, in particular 0.2 to 0.7 wt.% of the metal hydroxide on which the cyanide is based.

## Revendications

1. Procédé de fabrication d'agglomérés de cyanures inorganiques, en particulier de cyanures de métaux alcalins et de cyanures de métaux alcalino-terreux, comprenant le formage de cyanure inorganique particulaire obtenu par un procédé de cristallisation au moyen d'un dispositif de formage par compression du cyanure particulaire,
**caractérisé en ce qu'**
on envoie un cristallisat de cyanure séparé dans le cadre du procédé de cristallisation d'une liqueur-mère au moyen d'un dispositif de séparation solide - liquide, d'une teneur totale en eau de 2 à 15 % en poids, sans addition d'un adjuvant de formage, dans un dispositif de fabrication de briquettes ou de comprimés et on le comprime sous pression en agglomérés d'une teneur en eau se situant dans la plage de 0,1 à 6 % en poids, la teneur en eau des agglomérés étant toujours inférieure à celle du cristallisat utilisé pour leur fabrication.

2. Procédé selon la revendication 1,
**caractérisé en ce qu'**
on effectue la compression dans un dispositif de formage à une température se situant dans la plage de 40 à 70 °C et qu'ensuite les agglomérés ne sont pas séchés.

3. Procédé selon la revendication 1 ou 2,
**caractérisé en ce qu'**
on effectue le formage au moyen d'une machine à fabriquer des briquettes dont le cylindre de compactage présente la structure des agglomérés.

4. Procédé selon l'une quelconque des revendications 1 à 3,
**caractérisé en ce qu'**
on envoie au dispositif de formage un cristallisat de cyanure provenant d'un filtre rotatif, d'une teneur en eau de 4 à 13 % en poids, ou provenant d'une centrifugeuse, d'une teneur en eau de 2 à 10 % en poids.

5. Procédé selon l'une quelconque des revendications 1 à 4,
**caractérisé en ce qu'**
on transforme le cristallisât de cyanure de sodium, provenant d'un filtre rotatif ou d'une centrifugeuse, en agglomérés, le cristallisat étant comprimé à une température supérieure à la température de transformation du dihydrate de cyanure de sodium (Tᵤ = 35,7 °C) et se trouvant ainsi déshydraté.

6. Procédé selon l'une quelconque des revendications 1 à 5,
**caractérisé en ce qu'**
on effectue le formage du cyanure de sodium au-dessus de 40°C sous une pression qui permet une déshydratation jusqu'à une teneur en eau résiduelle des agglomérés (humidité adhérente et hydrates) de 0,5 à 5 % en poids.

7. Briquettes de cyanures inorganiques, en particulier de cyanures de métaux alcalins et de métaux alcalino-terreux, en particulier briquettes de cyanure de sodium, pouvant être obtenues suivant le procédé selon l'une quelconque des revendications 1 à 6.

8. Briquettes selon la revendication 7,
**caractérisées en ce qu'**
elles contiennent 0,1 à 1 % en poids, en particulier 0,2 à 0,7 % en poids de l'hydroxyde métallique se trouvant à la base du cyanure.
